# EUROPEAN PATENT APPLICATION

(11) **EP 4 407 635 A1**
(43) Date of publication of application: **31.07.2024**
(21) Application number: 23153868.7
(22) Date of filing: 30.01.2023
(51) Int. Cl.: G21K 1/02

(54) **MICROSTRUCTURE FOR SELECTIVE TRANSMISSION OF ELECTROMAGNETIC RADIATION**

(71) Applicant: Koninklijke Philips N.V., 5656 AG Eindhoven (NL)
(72) Inventor: JACOBS, Johannes, Eindhoven (NL); SIMON, Matthias, Eindhoven (NL)
(74) Representative: Philips Intellectual Property & Standards

(57) **Abstract**

A method (100) is provided for manufacturing a microstructure for selective transmission of electromagnetic radiation, the method comprising the steps of: a) irradiating (110) with first laser radiation, one or more regions of a substrate according to a predefined geometry of the microstructure to cause a structural modification of a material in the one or more irradiated regions such that wet chemical etching occurs at a higher rate at the one or more irradiated regions than at a non-irradiated region; b) performing (120) wet chemical etching to form a plurality of first openings having the predefined geometry of the microstructure in the substrate; and c) filling (130) the plurality of first openings with at least one material with a desired radiation attenuation spectrum to form a septa wall structure of the microstructure. The proposed method can cope with increased demands on quality, area uniformity, robustness and/or cost reductions, which are required to enable new medical imaging methods, such as spectral X-ray imaging and phase-contrast imaging.

## Description

### FIELD OF THE INVENTION

The present invention relates to a method and a system for manufacturing a microstructure for selective transmission of electromagnetic radiation, to a microstructure obtained by the method, and to an imaging component comprising the microstructure.

### BACKGROUND OF THE INVENTION

Medical X-ray and γ-ray imaging systems often employ an imaging component that includes a high-aspect-ratio microstructure which absorbs a portion of the high-energy photons used to create the image. Typical examples are X-ray anti-scatter grids (ASG's) which partly remove X-rays scattered by patient anatomy from the primary X-ray beam in order to enhance contrast of imaged tissue, and X-ray absorption gratings to generate contrast induced by attenuating, phase-shifting, and small-angle scattering properties of the imaged object. These large-area components often include fine, high-aspect-ratio radiation absorbing high-Z material structures (e.g., Pb, W, Au, etc.) embedded in a matrix of poorly radiation absorbing low-Z material (e.g., carbon, fibre, aluminum, etc.).

The ongoing improvements of current imaging techniques, such as 3D imaging (e.g., cone beam computed tomography (CBCT)), for interventional applications and image-guided radiotherapy, and the emergence of new clinical X-ray applications (such as spectral X-ray imaging and phase contrast imaging (PCI)) put stricter requirements on quality, area uniformity, manufacturing robustness, and costs of these components.

Unfortunately, the current fabrication methods of ASG's and gratings are not expected to meet these future demands. Furthermore, they may be insufficiently robust and flexible to manufacture a large variety of customized imaging components.

### SUMMARY OF THE INVENTION

There may be a need to provide an improved method for manufacturing a microstructure for selective transmission of electromagnetic radiation, such as microstructured imaging components in X-ray and γ-ray imaging.

The object of the present invention is solved by the subject-matter of the independent claims, wherein further embodiments are incorporated in the dependent claims. It should be noted that the following described aspects of the invention apply also for the method and the system for manufacturing a microstructure for selective transmission of electromagnetic radiation, the microstructure obtained by the method, and the imaging component.

According to a first aspect of the present invention, there is provided a method for manufacturing a microstructure for selective transmission of electromagnetic radiation, the method comprising the steps of:
a) irradiating, with first laser radiation, one or more regions of a substrate according to a predefined geometry of the microstructure to cause a structural modification of a material in the one or more irradiated regions such that wet chemical etching occurs at a higher rate at the one or more irradiated regions than at a non-irradiated region;
b) performing wet chemical etching to form a plurality of first openings having the predefined geometry of the microstructure in the substrate; and
c) filling the plurality of first openings with at least one material with a desired radiation attenuation spectrum to form a septa wall structure of the microstructure.

The present disclosure proposes a new scalable process technology platform to manufacture microstructured components, such as high-aspect-ratio microstructured imaging components, for X-ray and γ-ray imaging. Laser microfabrication is used to create focused high-aspect-ratio trenches in a transparent, large, low-Z substrate (e.g., glass), followed by filling these trenches with a radiation energy absorbing high-Z material (e.g., tungsten).

The large flexibility of laser beam writing may make it possible to produce high-aspect ratio metal structure with varying height, wall thickness, aspect ratio, pixel shape, pixel pitch, etc., across the substrate. Examples of the microstructure include, inter alia, an ASG with high grid ratio in the centre and lower grid ratio towards the periphery, or a bowtie filter build from patterned structures with gradually increasing X-ray absorbance from its centre towards the periphery. Thus, the proposed fabrication method of these components can cope with increased demands on quality, area uniformity, robustness and/or cost reductions, which are desirable in enabling new medical imaging methods, such as spectral X-ray imaging and phase-contrast imaging.

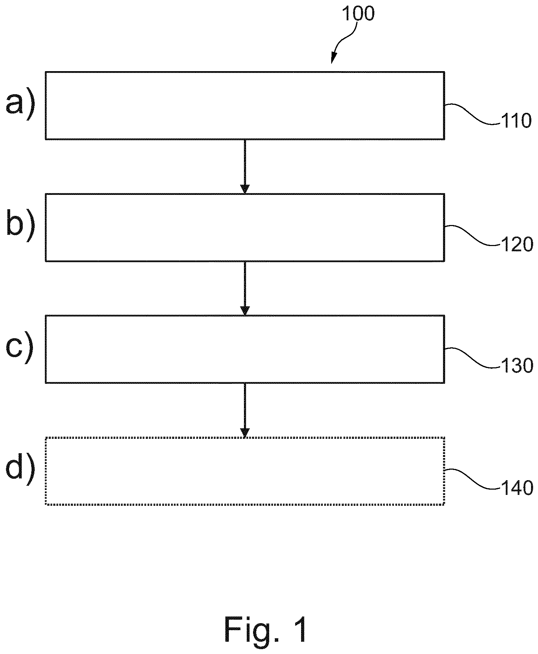

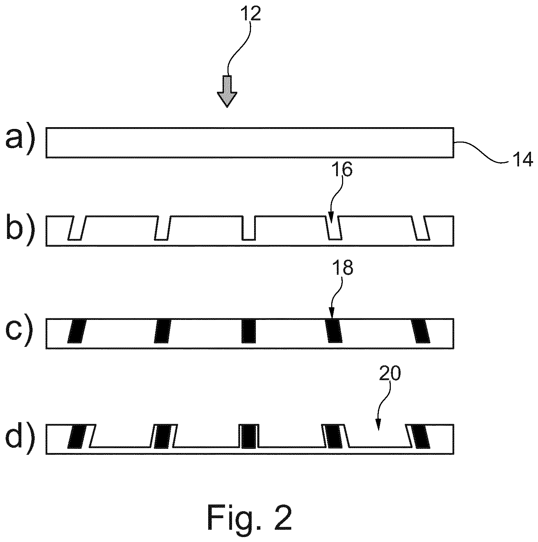

This will be explained in detail hereinafter and in particular with respect to the examples shown in Figs. 1 and 2.

According to an embodiment of the present invention, the method further comprises d) irradiating, with second laser radiation, one or more non-irradiated regions according to the predefined geometry of the microstructure, and performing wet etching to form a plurality of second openings between the plurality of first openings.

*For example, this optional step may increase transmission of primary X-rays through the ASG. This will be explained in detail hereinafter and in particular with respect to the examples shown in* *FIGS. 1* *and* *2**.*

According to an embodiment of the present invention, *one or more of the plurality of first openings have a ratio* of depth to width greater than or equal to 10, optionally greater than or equal to 100.

Medical X-ray and γ-ray imaging systems often employ an imaging component that includes a high-aspect-ratio microstructure which absorbs a portion of the high-energy photons used to create the image. Examples are X-ray anti-scatter grids, absorption gratings, collimators, bowtie filters, and energy filters.

The method as described herein may thus provide a scalable process technology platform to manufacture various high-aspect-ratio microstructured imaging components in X-ray and γ-ray imaging.

According to an embodiment of the present invention, the substrate comprises a glass material or a plastic material.

According to an embodiment of the present invention, at least one of the first laser radiation and second laser radiation is produced by a focused pulsed femtosecond laser.

Femto-laser micromachining technology has demonstrated the manufacturability of various monolithically integrated devices such as optofluidic, optomechanical and photonic devices. As glasses (e.g. fused silica), polymers, dielectrics or crystals are usually used as transparent substrate materials, laser beams can be focused almost anywhere inside the substrate material and the energy can be deposited almost anywhere in the volume. The energy deposition causes a structural modification of the material, so that subsequent wet chemical etching occurs at a high much higher rate at exposed areas than at non-exposed areas. This localized enhanced susceptibility to wet chemical etching (the etch selectivity) depends on various femto-laser parameters, such as pulse duration, pulse energy, and repetition rate.

According to an embodiment of the present invention, the method further comprises bending the substrate in one or two dimensions to shape the substrate according to a desired curvature.

Some X-ray imaging systems (e.g., standard CT, curved CBCT) may include curved, rather than flat, ASG's or gratings. In this case, the microfabrication of the desired septa wall structure may still occur on a thin flat substrate, which may be subsequently bended slightly in one or two dimensions to meet the desired curvature, e.g., using a mould at elevated temperature.

According to an embodiment of the present invention, the plurality of first openings are angulated towards a common focal point.

In many X-ray imaging applications focused ASG's and gratings are used in which trenches are angulated towards a common focal spot in the X-ray source.

This laser-based structuring approach as described herein may enable accurate positioning of angulated septa wall structures across the complete substrate. This will be explained in detail hereinafter and in particular with respect to the examples shown in Figs. 1 and 2.

According to an embodiment of the present invention, in step c) the plurality of first openings are filled with at least two materials with different radiation attenuation spectra.

High-aspect-ratio material structures may enable to modulate the spatial energy incident X-ray beams through application of different X-ray absorbing materials in the septa walls.

According to an embodiment of the present invention, *the electromagnetic radiation comprises at least one of gamma radiation or X-ray radiation.*

*Examples of medical imaging system that may benefit from the microstructure may include, but are not limited to, X-ray devices (e.g., mammography devices), computed tomography (CT) scanners,* single-photon emission computed tomography (*SPECT) devices, and* positron emission tomography (*PET) scanners.*

According to a second aspect of the present invention, there is provided a microstructure for selective transmission of electromagnetic radiation, obtainable by a method according to the first aspect and any associated example.

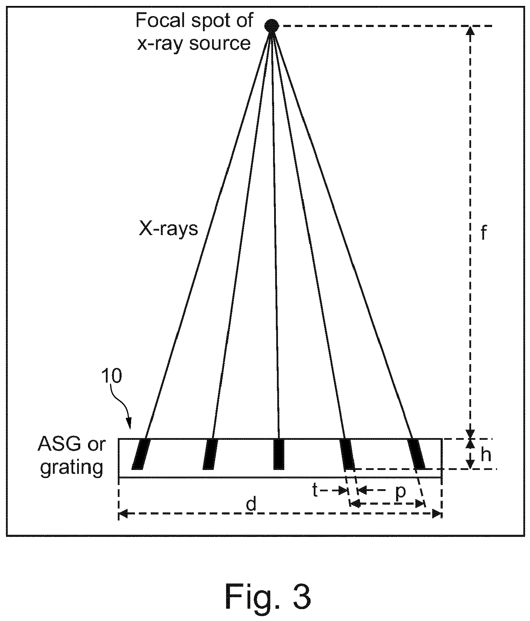

An example of the microstructure is illustrated in Fig. 3.

According to a third aspect of the present invention, there is provided an imaging component comprising the microstructure.

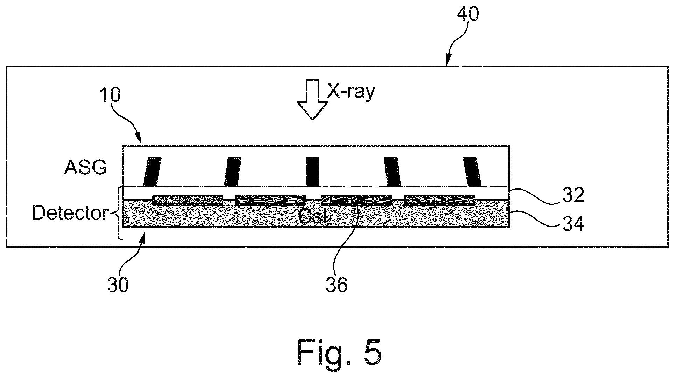

Examples of the imaging components include, inter alia, microstructure imaging components in X-ray and γ-ray imaging, such as X-ray anti-scatter grids, absorption gratings, collimators, bowtie filters, and energy filters. An example of the imaging component is shown in Fig. 5.

According to an embodiment of the present invention, the imaging component comprises a plurality of stacked microstructures.

In contrast to many currently-used assembly processes, the laser-based structuring approach as described herein may enable more accurate positioning of (angulated) septa wall structures across the substrate. These can be placed accurately relative to existing reference points and/or additionally manufactured alignment marks on the substrate. This alignment feature can be used to fabricate stacked microstructures. The septa wall structures may be angulated towards a common focal point.

According to an embodiment of the present invention, the imaging component comprises one or more of:
- an X-ray or gamma-ray filter;
- a component with X-ray or gamma-ray shielding functionality;
- an X-ray or gamma-ray collimator;
- an anti-scatter device; and
- an X-ray or gamma-ray grating.

According to an embodiment of the present invention, the imaging component comprises the microstructure in form of an anti-scatter device and an X-ray detector, wherein a septa wall structure of the anti-scatter device is aligned and overlapped with dead-area zones between a plurality of detection elements of the X-ray detectors.

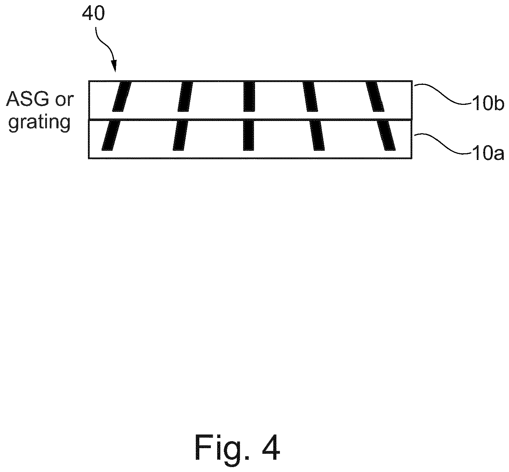

This will be explained hereinafter and in particular with respect to the examples shown in Figs. 4 and 5.

According to a fourth aspect of the present invention, there is provided a system for manufacturing a microstructure for selective transmission of electromagnetic radiation, the device comprising:
- an optical laser system;
- a chemical etching system;
- a material depositing system; and
- a control system comprising one or more controllers;
   wherein the control system is configured to control the optical laser system to irradiate, with first laser radiation, one or more regions of a substrate according to a predefined geometry of the microstructure to cause a structural modification of a material in the one or more irradiated regions such that wet chemical etching occurs at a higher rate at the one or more irradiated regions than at a non-irradiated region;
   wherein the control system is configured to control the chemical etching system to perform wet chemical etching to form a plurality of first openings having the predefined geometry of the microstructure in the substrate ; and
   wherein the control system is configured to control the material depositing system to fill the plurality of first openings with at least one material with a desired radiation attenuation spectrum to form a septa wall structure of the microstructure.

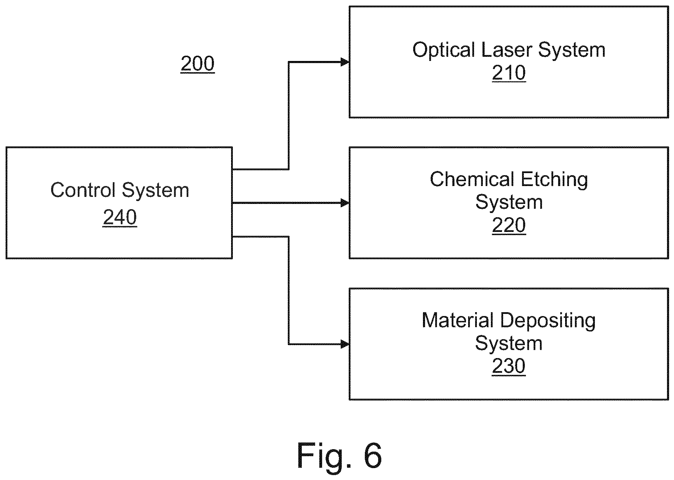

This will be explained hereinafter and in particular with respect to the example shown in Fig. 6.

According to another aspect, there is provided a computer program comprising instructions to cause the system according to the fourth aspect to execute the steps of the method according to the first aspect and any associated example.

According to a further aspect, there is provided a computer-readable medium having stored thereon the computer program.

### BRIEF DESCRIPTION OF THE DRAWINGS

These and other aspects of the invention will be apparent from and elucidated further with reference to the embodiments described by way of examples in the following description and with reference to the accompanying drawings, in which
Fig. 1 illustrates a flowchart describing a method for manufacturing a microstructure for selective transmission of electromagnetic radiation.
Fig. 2 illustrates an example of a manufacturing process.
Fig. 3 illustrates an example of a microstructure.
Fig. 4 illustrates a further example of a microstructure.
Fig. 5 illustrates an example of an imaging component.
Fig. 6 illustrates an example of a system for manufacturing a microstructure for selective transmission of electromagnetic radiation.

It should be noted that the figures are purely diagrammatic and not drawn to scale. In the figures, elements which correspond to elements already described may have the same reference numerals. Examples, embodiments or optional features, whether indicated as non-limiting or not, are not to be understood as limiting the invention as claimed.

### DETAILED DESCRIPTION OF EMBODIMENTS

The present invention will now be described more fully hereinafter with reference to the accompanying drawings, in which preferred embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. Those of ordinary skill in the art realize that the following descriptions of the embodiments of the present invention are illustrative and are not intended to be limiting in any way. Other embodiments of the present invention will readily suggest themselves to such skilled persons having the benefit of this disclosure. Like numbers refer to like elements throughout.

Although the following detailed description contains many specifics for the purposes of illustration, anyone of ordinary skill in the art will appreciate that many variations and alterations to the following details are within the scope of the invention. Accordingly, the following embodiments of the invention are set forth without any loss of generality to, and without imposing limitations upon, the claimed invention.

Fig. 1 illustrates a flowchart describing a method 100 for manufacturing a microstructure for selective transmission of electromagnetic radiation. The microstructure may be suitable for high-aspect ratio microstructured imaging components in X-ray (e.g., X-ray, CBCT, CT) and γ-ray (e.g., SPECT, PET) imaging, such as X-ray anti-scatter grids, absorption gratings, collimators, bowtie filters, and energy filters. The following steps will be described in conjunction with Fig. 2.

In step 110, i.e., step a), first laser radiation 12 is irradiated to one or more regions, such as of a substrate 14 according to a predefined geometry of the microstructure to cause a structural modification of a material in the one or more irradiated regions such that subsequent wet chemical etching occurs at a higher rate at the one or more irradiated regions than at a non-irradiated region.

The substrate may be made of a material that is transparent or at least partially transparent to the first laser radiation. For example, glasses (e.g. fused silica), polymers, dielectrics, or crystals may be used as transparent substrate materials, because laser beams can be focused anywhere inside the material and the energy can be deposited anywhere in the volume.

Thanks to the non-linear nature of the ultrafast laser-matter interaction, the relatively low laser energy is locally absorbed wherever the laser spot is focused. The non-linear absorption of laser energy makes it possible to use a moderate average laser power, although enormous instantaneous powers are locally reached during the laser exposure. It is even possible to fabricate features smaller than the wavelength of the laser itself (e.g., 1030 nm). As an example, the first laser radiation may be produced by a focused pulsed femtosecond laser. The "femtoprint" process using the femto-laser micromachining technology, which is a subtractive 3D printing technique, is able to create narrow deep channels in glass with very high trench aspect ratios (TAR > 100), which are comparable to or higher than obtained with competitive processes like Reactive Ion Etching (RIE).

The energy deposition causes a structural modification of the material, so that subsequent wet chemical etching occurs at a high much higher rate at exposed region(s) than at non-exposed region(s). This localized enhanced susceptibility to wet chemical etching (the etch selectivity) depends on various laser parameters, such as pulse duration, pulse energy and repetition rate.

Examples of the predefined geometry of the microstructure include, inter alia, a one-dimensional (1D) design, two-dimensional (2D) design (e.g., rectangular or hexagonal pixels), and customized grid design (e.g.,1½D) with flexible grid pitch, grid ratio and/or grid pixel geometry. The predefined geometry of the microstructure may include information like height, wall thickness, aspect ratio, pixel shape, pixel pitch, etc., across the substrate.

In step 120, i.e., step b), wet chemical etching is performed to form a plurality of first openings 16 having the predefined geometry of the microstructure in the substrate 14.

As shown in Fig. 2, laser exposure may be controlled in such a way that the first openings 16 do not extend completely till the other side of the substrate 14. A thin solid layer of substrate remains as supporting base substrate for the complete system of the first openings 16.

In some examples, the optical laser system that generates the first laser radiation may be designed and programmed to write a specified structure (e.g., array) of the first openings 16 characterized by a very small continuous increase of trench angles from the centre towards the periphery of the substrate 14. The optical laser system may also take into account of the difference of refractive indexes at the air-glass interface and the increased optical path lengths for the first openings 16 towards the periphery of the substrate 14. An example of the angulated first openings is shown in Fig. 2.

In step 130, i.e., step c), the plurality of first openings 16 are filled with at least one material 18 with a desired radiation attenuation spectrum to form a septa wall structure of the microstructure.

*Examples of the material with a desired radiation attenuation spectrum include, inter alia, radio opaque material or partially radio opaque material. As* microstructures *are used for various radiation energies, it depends on the application and on the structure size (e.g., the thickness of the radiation absorbing walls) whether the material can be considered as radiation opaque or practically radiation opaque. In mammography applications, X-ray energies of about 20 keV are used. For these energies, copper may be considered as practically radiation opaque, which means that microstructure walls fulfilling the requirements of certain geometry parameters, like wall thickness (e.g., 20 µm), channel height (e.g., 2 mm) etc. lead to absorption of the kind of radiation that is to be selectively absorbed, so that a noticeable improvement of a quality parameter of the radiation detection occurs. A quality parameter may be the scatter radiation-to-primary radiation ratio (SPR), the signal-to-noise ratio (SNR), or the like. For CT applications in the range of e.g., 80 keV, molybdenum (Mo) or other refractory materials (e.g., tungsten (W)) can be considered as practically radiation opaque, but other materials like copper-, aluminum or tin may be likewise practically radiation opaque if the structure is made in the αppropricrtc thickness.*

*The* at least one material *that is interesting for X-ray imaging may comprise materials with high z-numbers. The attractiveness is higher if the absorption through a thin material layer (e.g., antiscatter grid wall) is significantly higher compared to the imaged objects and allows a strong beam absorption of an X-ray radiation with a typical energy spectrum used in medical imaging. Examples of materials with high z-numbers may include one or more of: tungsten, molybdenum, lead, bismuth, silver, gold, tantalum., tin and low-melting temperature solders, e.g., Bi58Sn42, etc.*

*Numerous techniques may be used to fill the plurality of first openings 16 with the at least one material 18. One approach is the deposition of a suitable conductive layer inside the first openings 16 by atomic layer deposition followed by conformal electroplating of gold. Another approach is to deposit the absorbent filling into the first openings in the shape of small tungsten particles. After filling a thin cover layer can be deposited on the substrate to prevent loss of material from the trenches during subsequent processing.*

*In the example shown in* *Fig. 2*, the first openings 16 are filled with a single material. However, it will be appreciated that in some implementations the plurality of first openings may be filled with at least two materials with different radiation attenuation spectra. High-aspect-ratio material structures enable not only to modulate the spatial intensity of incident X-ray beams, but also its spatial energy through application of different X-ray absorbing materials in the septa walls. For example, dedicated energy filters can be realized by filling trenches with two materials with largely different X-ray attenuation spectrum (e.g., gold/tin, molybdenum/tungsten, copper/aluminum).

*Fig. 1* *also illustrates an optional step 140, i.e., step d), in which second laser radiation is irradiated to one or more non-irradiated regions according to the predefined geometry of the microstructure, and performing wet etching to form a plurality of second openings 20 between the plurality of first openings 16. The first laser radiation and the second laser radiation may represent different sequences of the laser exposure. This step is optional, and may be used to e.g., increase transmission of primary X-rays through the ASG.*

Similarly, laser exposure may be controlled in such a way that the second openings 20 do not extend completely till the other side of the substrate 14. A thin solid layer of substrate remains as supporting base substrate for the complete system of the second openings 16.

*In the example shown in* *Fig. 2**, the first openings 16 and the second openings are both at the top of the substrate 14. In some other examples (not shown), the first openings 16 may be at the top of the substrate and the second openings 20 are at the bottom of the substrate 14. Such reverse design may be manufactured by reversing the substrate in the optical laser system or by performing laser exposures from the opposite side.*

*It will be appreciated that the above operation may be performed in any suitable order, e.g., consecutively, simultaneously, or a combination thereof. In some examples, step d) may be performed after* step c). In some examples, it is possible to create first and second openings in the same step. Thus, the process will be as follows: a) → a combination of b) and d) → c).

Fig. 3 shows an example of a microstructure 10 obtainable by the method described herein. In the illustrated example, the microstructure 10 may be a focused ASG or grating in which each X-ray absorbing septa wall is accurately directed towards the focal spot of the X-ray source in order to maximize the transmission of primary X-rays towards the X-ray detector. As an example, the microstructure 10 may have a size (d) of in a range between 20×20 and 50×50 cm², a pixel pitch (p) in a range between 3 and 1000 µm, a trench height (h) in a range between 0.1 and 30 mm, a trench thickness (t) in a range between 3 and 50 µm, and a focal length (f) in a range between 50 and 400 cm.

In some cases, X-ray imaging systems (e.g., standard CT, curved CBCT, etc.) may not require flat but curved ASG's or gratings. In this case, the microfabrication of the desired septa wall structure may still occur on a thin flat substrate, which is subsequently bended slightly in one or two dimensions to meet the desired curvature, e.g., using a mould at elevated temperature. The curved substrate may be kept in its original curved shape by fixing it in a pre-shaped metal frame.

In contrast to most currently used ASG assembly processes, this laser-based structuring approach described herein may enable more positioning of septa wall structures, such as angulated septa wall structures shown in Fig. 3, across the complete substrate. These can be placed accurately relative to existing reference points and/or additionally manufactured alignment marks on the substrate.

In some examples, the alignment feature may be used to create a multilayer microstructured component with stacked microstructures. Fig. 4 shows an example of a dual-layer microstructured component 40 based on two microstructures 10, such as microstructures 10a and 10b shown in Fig. 4, which are manufactured according to the method described herein. In the illustrated example, the septa walls of the microstructure 10b are aligned with the septa walls of the microstructure 10a to create focused ASG's and gratings, in which trenches are angulated towards a common focal spot in the X-ray source. Although a dual-layer microstructured component is shown in Fig. 4 by way of example, it will be appreciated that the multilayer microstructured component may be created based on three or more stacked microstructures 10.

In some examples, this alignment feature may be used to integrate the microstructure 10 with other devices to create new functionalities. Fig. 5 shows an example of an imaging component 40, which is an integration of the microstructure 10 with an X-ray detector 30. In this illustrated example, the microstructure 10 is an ASG that is coupled directly on top of the X-ray detector 30 to create an enhanced fill factor of pixel areas inside the X-ray detector 30. The X-ray detector 30 of the illustrated example comprises an X-ray sensor 32 and a CsI scintillator 34. The X-ray sensor 32 comprises an array of photodiodes 36 which may be connected via TFT switches to datalines (not shown) on a thin glass or foil substrate. The CsI scintillator 34 is exposed by X-rays. In this case, the X-ray sensitivity may be enhanced because the septa walls of the ASG are perfectly aligned and overlapping with the dead-area zones between active pixels. Similarly, an anti-scatter device can smartly be integrated in a multi-layer detector.
Although not shown, further examples of the imaging component that comprises the microstructure include, inter alia, an X-ray or gamma-ray filter, a component with X-ray or gamma-ray shielding functionality, an X-ray or gamma-ray collimator, and an X-ray or gamma-ray grating.
The method as described herein may improve the performance of ASG's. It may e.g. enable realization of 2D ASG's with improved anti scatter performance. The method may also enable a robust ASG manufacturing process. E.g. robust manufacturing of large area ASGs or other microstructures. Furthermore, the method may enable lead-free manufacturing of microstructures for selective transmission of electromagnetic radiation.
Fig. 6 illustrates an example of a system 200 for manufacturing a microstructure for selective transmission of electromagnetic radiation. The system 200 comprises an optical laser system 210, a chemical etching system 220, a material depositing system 230, and a control system 240.
The control system 240 may comprise one or more controllers. The term "controller" is used generally to describe various apparatus relating to the operation of a stream probe apparatus, system, or method. A controller can be implemented in numerous ways (e.g., such as with dedicated hardware) to perform various functions discussed herein. A controller may be implemented with or without employing a processor, and also may be implemented as a combination of dedicated hardware to perform some functions and a processor (e.g., one or more programmed microprocessors and associated circuitry) to perform other functions. Examples of controller components that may be employed in various embodiments of the present disclosure include, but are not limited to, conventional microprocessors, application specific integrated circuits (ASICs), and field-programmable gate arrays (FPGAs). These and other aspects of the present invention will become apparent from and be elucidated with reference to the embodiments described hereinafter.
The control system 240 is configured to control the optical laser system 210 to irradiate, with first laser radiation, one or more regions of a substrate according to a predefined geometry of the microstructure to cause a structural modification of a material in the one or more irradiated regions such that wet chemical etching occurs at a higher rate at the one or more irradiated regions than at a non-irradiated region.
The control system 240 is configured to control the chemical etching system 220 to perform wet chemical etching to form a plurality of first openings having the predefined geometry of the microstructure in the substrate. *One approach is the deposition of a suitable conductive layer inside the first openings by atomic layer deposition followed by conformal electroplating of gold. Another approach is to deposit the absorbent filling into the first openings in the shape of small tungsten particles. After filling a thin cover layer can be deposited on the substrate to prevent loss of material from the trenches during subsequent processing.*

The control system 240 is configured to control the material depositing system 230 to fill the plurality of first openings with at least one material with a desired radiation attenuation spectrum to form a septa wall structure of the microstructure.

In another exemplary embodiment of the present invention, a computer program or a computer program element is provided that is characterized by being adapted to execute the method steps of the method according to one of the preceding embodiments, on an appropriate system.

The computer program element might therefore be stored on a computer unit, which might also be part of an embodiment of the present invention. This computing unit may be adapted to perform or induce a performing of the steps of the method described above. Moreover, it may be adapted to operate the components of the above described apparatus. The computing unit can be adapted to operate automatically and/or to execute the orders of a user. A computer program may be loaded into a working memory of a data processor. The data processor may thus be equipped to carry out the method of the invention.

This exemplary embodiment of the invention covers both, a computer program that right from the beginning uses the invention and a computer program that by means of an up-date turns an existing program into a program that uses the invention.

The computer program element might be able to provide all necessary steps to fulfil the procedure of an exemplary embodiment of the method as described above.

According to a further exemplary embodiment of the present invention, a computer readable medium, such as a CD-ROM, is presented wherein the computer readable medium has a computer program element stored on it which computer program element is described by the preceding section.

A computer program may be stored and/or distributed on a suitable medium, such as an optical storage medium or a solid state medium supplied together with or as part of other hardware, but may also be distributed in other forms, such as via the internet or other wired or wireless telecommunication systems.

However, the computer program may also be presented over a network like the World Wide Web and can be downloaded into the working memory of a data processor from such a network. According to a further exemplary embodiment of the present invention, a medium for making a computer program element available for downloading is provided, which computer program element is arranged to perform a method according to one of the previously described embodiments of the invention.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfil the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. A method (100) for manufacturing a microstructure for selective transmission of electromagnetic radiation, the method comprising the steps of:
a) irradiating (110), with first laser radiation, one or more regions of a substrate according to a predefined geometry of the microstructure to cause a structural modification of a material in the one or more irradiated regions such that wet chemical etching occurs at a higher rate at the one or more irradiated regions than at a non-irradiated region;
b) performing (120) wet chemical etching to form a plurality of first openings having the predefined geometry of the microstructure in the substrate; and
c) filling (130) the plurality of first openings with at least one material with a desired radiation attenuation spectrum to form a septa wall structure of the microstructure.

2. The method according to claim 1, further comprising:
d) irradiating (140), with second laser radiation, one or more non-irradiated regions according to the predefined geometry of the microstructure, and performing wet etching to form a plurality of second openings between the plurality of first openings.

3. The method according to claim 1 or claim 2,
*wherein one or more of the plurality of first openings have a ratio* of depth to width greater than or equal to 10, optionally greater than or equal to 100.

4. The method according to any one of the preceding claims,
wherein the substrate comprises a glass material or a plastic material.

5. The method according to any one of the preceding claims,
wherein at least one of the first laser radiation and second laser radiation is produced by a pulsed femtosecond laser.

6. The method according to any one of the preceding claims, further comprising:
bending the substrate in one or two dimensions to shape the substrate according to a desired curvature.

7. The method according to any one of the preceding claims,
wherein the plurality of first openings are angulated towards a common focal point.

8. The method according to any one of the preceding claims,
wherein in step c) the plurality of first openings are filled with at least two materials with different radiation attenuation spectra.

9. The method according to any one of the preceding claims,
*wherein the electromagnetic radiation comprises at least one of gamma radiation or X-ray radiation.*

10. A microstructure (10) for selective transmission of electromagnetic radiation, obtainable by a method according to any one of the preceding claims.

11. An imaging component (40) comprising the microstructure of claim 10.

12. The imaging component according to claim 11,
wherein the imaging component comprises a plurality of stacked microstructures.

13. The imaging component according to claim 11 or claim 12,
wherein the imaging component comprises one or more of:
- an X-ray or gamma-ray filter;
- a component with X-ray or gamma-ray shielding functionality;
- an X-ray or gamma-ray collimator;
- an anti-scatter device; and
- an X-ray or gamma-ray grating.

14. The imaging component according to claim 11 or claim 12,
wherein the imaging component comprises the microstructure in form of an anti-scatter device and an X-ray detector, wherein a septa wall structure of the anti-scatter device is aligned and overlapped with dead-area zones between a plurality of detection elements of the X-ray detectors.

15. A system (200) for manufacturing a microstructure for selective transmission of electromagnetic radiation, the device comprising:
- an optical laser system (210);
- a chemical etching system (220);
- a material depositing system (230); and
- a control system (240) comprising one or more controllers;
wherein the control system is configured to control the optical laser system to irradiate, with first laser radiation, one or more regions of a substrate according to a predefined geometry of the microstructure to cause a structural modification of a material in the one or more irradiated regions such that wet chemical etching occurs at a higher rate at the one or more irradiated regions than at a non-irradiated region;
wherein the control system is configured to control the chemical etching system to perform wet chemical etching to form a plurality of first openings having the predefined geometry of the microstructure in the substrate; and
wherein the control system is configured to control the material depositing system to fill the plurality of first openings with at least one material with a desired radiation attenuation spectrum to form a septa wall structure of the microstructure.
